# EUROPÄISCHE PATENTSCHRIFT

(11) **EP 0 641 961 B1**
(45) Veröffentlichungstag und Bekanntmachung des Hinweises auf die Patenterteilung: **03.05.2000**
(21) Anmeldenummer: 94114121.0
(22) Anmeldetag: 08.09.1994
(51) Int. Cl.: F16J 15/34

(54) **Gleitringdichtung mit einem aus einem Innenring und einem Aussenring zusammengesetzten Gleitring**
Mechanical seal with a slip-ring composed of an inner and outer ring
Joint mécanique avec une bague glissante composée d'une bague intérieure et d'une bague extérieure

(30) Priorität: 08.09.1993 DE 9313585 U
(43) Veröffentlichungstag der Anmeldung: 08.03.1995
(73) Patentinhaber: Firma Carl Freudenberg, 69469 Weinheim (DE)
(72) Erfinder: Janssen, Dieter, D-21698 Harsefeld (DE)

(56) Entgegenhaltungen:
- EP-A- 0 327 845
- DE-A- 3 520 430
- DE-A- 4 201 292
- US-A- 3 895 811
- US-A- 4 519 615

## Beschreibung

Die Erfindung bezieht sich auf eine Gleitringdichtung, deren Gleitring sich zusammensetzt aus einem die Gleitdichtfläche bildenden Innenring und einem auf dessen Umfangsfläche aufgespannten und durch Reibung drehfest damit verbundenen Außenring aus elastisch verformbarem Material wie Stahl, der Vorsprünge und/oder Ausnehmungen zum Zusammenwirken mit Mitnehmern aufweist.

Bei bekannten Gleitringen dieser Art besteht der Innenring aus Keramikmaterial und der Außenring aus einem aufgeschrumpften Stahlring, der den zugspannungs empfindlichen Innenring vor den Fliehkräften schützt und die Vorsprünge bzw. Ausnehmungen zum Zusammenwirken mit den Mitnehmern bildet. Letzteres ist erforderlich, um eine Drehverbindung zwischen dem Gleitring und dem ihm zugeordneten Maschinenteil zu schaffen. Dies kann eine Welle sein, wobei in der Regel der Gleitring sich mit der Welle dreht, oder es kann ein Gehäuse sein, wobei der Gleitring mit dem Gehäuse stillsteht. Gleitringe mit einem aufgeschrumpften Außenring sind wegen der erforderlichen geringen Toleranzen aufwendig und haben wegen des unterschiedlichen Wärmedehnungskoeffizienten der Werkstoffe des Innen- und Außenrings nur einen eingeschränkten Temperatur-Anwendungsbereich, weil bei höheren Temperaturen der zur Mitnahme des Innenrings erforderliche Reibschluß infolge der größeren Dehnung des Außenrings verlorengehen kann. Klebemittel sind unerwünscht, weil sie die chemisch-physikalischen Anwendungsgebiete der Dichtung einschränken.

Bekannt sind auch Gleitringe, die ausschließlich aus dem Keramikwerkstoff bestehen. Jedoch ist es zum einen aufwendig, sie mit den zum Zusammenwirken mit den Mitnehmern erforderlichen Vorsprüngen bzw. Ausnehmungen auszustatten, und zum anderen besteht die Gefahr, daß im Bereich des Mitnehmerangriffs Partikeln abgesprengt werden und schädigend vagabundieren.

Der Erfindung liegt daher die Aufgabe zugrunde, eine Gleitringdichtung der eingangs genannten Art zu schaffen, die weniger aufwendig ist.

Der Erfindung liegt die Aufgabe zugrunde, eine Gleitringdichtung der eingangs genannten Art zu schaffen, die den Reibschluß zwischen Innen- und Außenring auch bei angehobenen Temperaturen und ohne Notwendigkeit eines Klebmittels sichert.

Die erfindungsgemäße Lösung besteht darin, daß die Vorsprünge bzw. Ausnehmungen des Außenrings derart ausgebildet sind, daß die von dem jeweils zugehörigen Mitnehmer darauf in Umfangsrichtung ausgeübte Kraft umgesetzt wird in eine zusätzlich auf den Umfang des Innenrings ausgeübte Radialkraft.

Solange auf den Gleitring keine Umfangskraft durch die Mitnehmer ausgeübt wird, werden Innen- und Außenring durch den Reibschluß zusammengehalten, der auf die federnde Umfangs-Zugspannung des Außenrings zurückgeht. Wird nun eine Kraft in Umfangsrichtung auf die Vorsprünge bzw. Ausnehmungen des Außenrings ausgeübt, so wird dank der erfindungsgemäßen Ausbildung dieser Vorsprünge bzw. Ausnehmungen eine zusätzliche, reibungserhöhende Radialkraft geschaffen.

Mittel, die zur Bildung einer zusätzliche Radialkraft infolge von Verformung der Vorsprünge bzw. Ausnehmungen führen, sind im Stand der Technik bekannt. Sie können beispielsweise auf dem Prinzip der schiefen Ebene oder auf Hebelwirkung beruhen. Zur Nutzung des Prinzips der schiefen Ebene wirken die Vorsprünge bzw. Ausnehmungen und der ihnen jeweils zugehörige Mitnehmer über eine geneigt zur Tangentialrichtung verlaufende Fläche zusammen. Diese kann an den Vorsprüngen/Ausnehmungen und/oder am Mitnehmernehmer vorgesehen sein. Sie ist so angeordnet, daß die in Umfangsrichtung wirkende Kraft den Außenring an der jeweils betroffenen Stelle nach innen gegen den Innenring drückt und dadurch eine Radialkraft erzeugt, die sich der durch die elastische Umfangsspannung hervorgerufenen Kraft überlagert. Besonders vorteilhaft ist es, wenn der Außenring von einem flexiblen Metallband gebildet ist, das im Bereich jedes Vorsprungs eine sich vom Umfang des Innenrings entfernende Ausbiegung aufweist, die zumindest an einer Flanke die erwähnte geneigte Fläche aufweist. Zur Erzeugung einer drehrichtungs unabhängigen Anordnung ist es zweckmäßig, wenn die Ausbiegung auf beiden Seiten eine solche geneigte Fläche besitzt und folglich insgesamt dachförmig ausgebildet ist. Ein für die angegebenen Zwecke geeigneter Winkel der geneigten Fläche gegenüber der Tangentialrichtung kann durch Versuch ermittelt werden. Wenn er bei 45° liegt, wird die in Umfangsrichtung wirkende Kraft in eine etwa gleich große Radialkraft umgewandelt. Wenn zur Erreichung der Drehmitnahme des Innenrings eine geringere Radialkraft ausreicht, kann der Neigungswinkel der Fläche gegenüber der Tangentialrichtung größer sein; wird eine stärkere Kraftübersetzung gewünscht, so wird er entsprechend kleiner gewählt.

Die genannte Ausführung ist auch deshalb vorteilhaft, weil die im Bereich der Vorsprünge gebildeten Ausbiegungen des flexiblen, federelastischen Metallbands eine geeignete Federungsreserve zur Erzeugung der Umfangsspannung bilden.

Wenn das Hebelprinzip verwendet wird, so kann beispielsweise als Vorsprung ein radialer Hebelarm an den Außenring angelenkt sein, mit dem ein zweiter, in Umfangsrichtung verlaufender Hebelarm im wesentlichen starr verbunden ist. Beim Einwirken der Mitnehmerkraft auf den radialen Hebelarm wird eine den Längenverhältnisses am Hebel entsprechende Radialkraft von dem zweiten Hebelarm auf den Innenring ausgeübt. Der Hebel braucht kein vom Außenring gesondertes Teil zu sein; die Anlenkung kann vielmehr die Form eines Biegegelenks oder einer Biegestrecke annehmen.

Bei einer anderen Ausführung des Hebelprinzips stellt der Vorsprung ein Verbindungsglied zwischen zwei Abschnitten des Außenrings dar, indem er an zwei in Umfangsrichtung voneinander beabstandeten Stellen mit den Ringabschnitten verbunden ist. Eine auf den Vorsprung in Umfangsrichtung ausgeübte Mitnehmerkraft neigt dann dazu, den Vorsprung so zu kippen, daß sich die Strecke zwischen den beiden Verbindungspunkten vermindert und dadurch eine Umfangskraft hervorgerufen wird, die wiederum zu einer Erhöhung der den Reibschluß bestimmenden Radialkraft führt.

Die Erfindung will nicht ausschließen, daß der Reibschluß zwischen Innen- und Außenring durch zusätzliche Maßnahmen wie Aufrauhung oder Verklebung oder von der Kreisform abweichende Gestalt der Umfangsfläche des Innenrings gesteigert wird; sie will aber sicherstellen, daß der Reibschluß beim Auftreten besonders hoher Mitnehmerkräfte auch dann erhalten bleibt, wenn derartige Mittel versagen sollten, und ist dazu auch dann in der Lage, wenn die Umfangsfläche des Innenrings gemäß bevorzugter Ausführung zylindrisch ist. Sie hat den Vorteil, daß die erfindungsgemäß bewirkte Verstärkung des Reibschlusses der Mitnehmerkraft proportional ist. Je größer die Mitnehmerkraft ist, umso stärker wird auch der Reibschluß.

Die Erfindung wird im folgenden näher unter Bezugnahme auf die Zeichnung erläutert, die schematisch vorteilhafte Ausführungsbeispiele veranschaulicht. Es zeigen:
- Fig.1: eine Axialansicht,
- Fig.2: eine radiale Schnittansicht gemäß Linie II-II der Fig.1 und
- Fig.3: eine Teilansicht in vergrößertem Maßstabe einer ersten Ausführungsform,
- Fig.4: ein der Fig.3 entsprechendes Detail einer zweiten Ausführungsform und
- Fig.5 u.6: entsprechende Teildarstellungen einer dritten Ausführungsform.

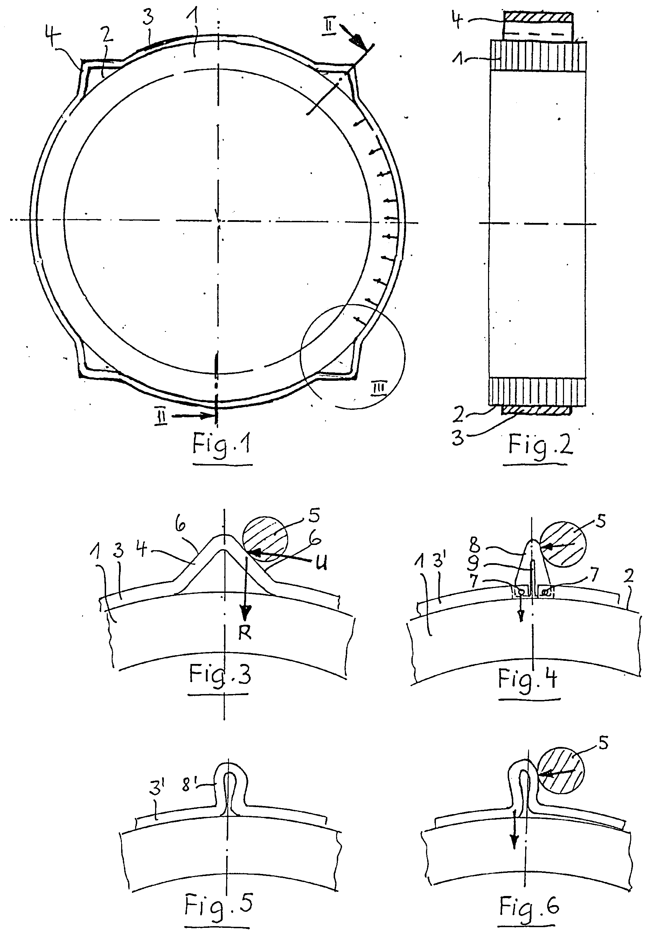

Gemäß Fig.1 wird die Gleitdichtfläche von einem aus beispielsweise Keramikmaterial bestehenden Innenring 1 gebildet, dessen Umfangsfläche 2 zylindrisch ist. Der Innenring 1 wird umgeben von einem Außenring 3, der aus federhartem Edelstahl besteht und über den größten Teil der Umfangsfläche 2 an dieser flächig anliegt. Er steht in Umfangsrichtung unter einer nachgiebigen, durch seine Federeigenschaften geprägten Umfangskraft, die eine Radialkraft (angedeutet durch eine Vielzahl kleiner Pfeile) erzeugt, die den Reibschluß zwischen Innen- und Außenring bewirkt. Die Federeigenschaften des Außenrings 3 kommen dadurch zustande, daß er an mehreren Stellen Ausbiegungen 4 aufweist, die sich im Gegensatz zu den dem Umfang des Innenrings folgenden Abschnitten des Außenrings unter Zugspannung verformen und daher nachgeben können. Die Federkonstante und die Ausgangsverformung des Außenrings sind so gewählt, daß im Außenring im unbelasteten Zustand eine Zugkraft wirkt, die zur Erzeugung eines hinreichenden Reibschlusses zwischen Innen- und Außenring unter normalen Verhältnissen ausreicht.

Die Ausbiegungen 4 bilden die Vorsprünge, über welche der Gleitring mit Mitnehmern 5 zusammenwirkt. Die Mitnehmer brauchen im vorliegenden Zusammenhang nicht erläutert zu werden, da sie allgemein bekannt sind.

Wie Fig.3 (Ausschnitt III aus Fig. 1) zeigt, ist der Vorsprung 4 dachförmig symmetrisch ausgebildet, so daß sich zwei unter gleichem Winkel gegensinnig zum Radius geneigte Flächen 6 ergeben. Je nach Drehrichtung wirkt die eine oder andere dieser Flächen mit dem Mitnehmer 5 zusammen. Dieser übt eine Umfangskraft U darauf aus, die nach den Gesetzen der schiefen Ebene zum Auftreten einer Radialkraft R führt, die in diesem Bereich die Pressung des Außenrings 3 auf den Innenring 1 erhöht. Je größer die Umfangskraft ist, desto mehr erhöht sich dadurch der Reibschluß zwischen Innen- und Außenring. Dadurch kann die im Außenring herrschende Grundspannung vermindert werden bzw. die Mitnahmesicherung des Innenrings wird entsprechend erhöht.

Im Ausführungsbeispiel gemäß Fig.4 setzt sich der Außenring 3' aus mehreren Abschnitten zusammen, deren Enden bei 7 mit einem Verbindungsteil 8 gelenkig verbunden sind, das radial nach außen vorragt und dadurch den mit einem Mitnehmer zusammenwirkenden Vorsprung des Gleitrings bildet. Wird er von einem Mitnehmer 5 mit einer Umfangskraft U belastet, so unterliegt er einem Drehmoment, das den in der Zeichnung linken Gelenkpunkt gegen den Innenring 1 drückt, während der in der Zeichnung rechte Gelenkpunkt dazu neigt, vom Innenring abgehoben zu werden. Die Größe dieses Drehmoments wird von der Stärke der in Umfangsrichtung wirkenden Mitnehmerkraft U und dem Hebelarm zwischen der Wirkungslinie dieser Mitnehmerkraft und der Umfangsfläche 2 des Innenrings 1 bestimmt. Ein zweiter Hebelarm stellt die Strecke zwischen den Anlenkpunkte 7 dar. Die unter der Hebelwirkung verstärkte Anpressung des Außenrings im Bereich des in der Zeichnung linken Anlenkpunkts 7 führt zu einer Verstärkung des Reibschlusses zwischen Innen- und Außenring. Außerdem bewirkt die Anhebung des rechten Anlenkpunktes 7 vom Innenringumfang eine Verkürzung der Umfangslänge des Außenrings; bzw. der Außenring wird gedehnt, wodurch sich eine erhöhte Umfangskraft entwickelt, die zu einer Erhöhung der zwischen den beiden Ringen wirkenden Radialkraft und dem Reibschluß führt. Der Vorsprung 8 kann als Federelement ausgebildet sein, indem er beispielsweise bei 9 geschlitzt ist.

Die dritte Ausführungsform gemäß Fig.5 und 6 beruht auf demselben Prinzip wie Fig.4. Der Unterschied besteht darin, daß der Vorsprung 8' nicht als gesondertes Teil gelenkig mit den Außenringabschnitten 3' verbunden ist, sondern aus einem Stück mit diesem besteht. Die unter Bezugnahme auf Fig.4 beschriebene Funktion kommt in derselben Weise zustande mit dem Unterschied, daß die Bewegung des Vorsprungs 8', die in Fig.6 im Unterschied zu Fig.5 zeichnerisch dargestellt ist, durch Biegung der Grenzbereiche zwischen den Außenringabschnitten 3' und dem Vorsprung 8' zustande kommt. Voraussetzung dafür ist die flexible Federeigenschaft des den Außenring bildenden Bandmaterials.

Zwar findet die Erfindung hauptsächlich bei zylindrischen Innenringen Anwendung. Sie können aber auch oval oder polygonal etc. sein, wodurch die Drehverbindung zwischen Innenring und Außenring verbessert werden kann, ohne daß die Umfangsfläche des Innenrings den hohen Genauigkeitsansprüchen genügen müßte, die bei einem direkten Zusammenwirken der vom Kreisquerschnitt abweichenden Umfangsfläche eines Keramik-Gleitrings mit einem Mitnehmer gestellt werden, und auch ohne die Gefahr des Absprengens von Partikeln. Auch bei nicht kreisförmig begrenzter Umfangsfläche des Innenrings kann die Erfindung Vorteile geben.

## Patentansprüche

1. Gleitring für eine Gleitringdichtung, der sich zusammensetzt aus einem die Gleitdichtfläche bildenden Innenring (1) und einem auf dessen Umfangsfläche (2) aufgespannten und durch Reibung drehfest damit verbundenen Außenring (3, 3') aus elastisch verformbarem Material wie Stahl, der Vorsprünge (4,8,8') und/oder Ausnehmungen zum Zusammenwirken mit Mitnehmern (5) aufweist, dadurch gekennzeichnet, daß die Vorsprünge (4, 8, 8') bzw. Ausnehmungen des Außenrings derart ausgebildet sind, daß die von dem jeweils zugehörigen Mitnehmer (5) darauf in Umfangsrichtung ausgeübte Kraft umgesetzt wird in eine zusätzlich auf den Umfang des Innenrings (1) ausgeübte Radialkraft.

2. Gleitringdichtung nach Anspruch 1, dadurch gekennzeichnet, daß die Vorsprünge (4) bzw. Ausnehmungen und der jeweils zugehörige Mitnehmer (5) über eine geneigt zur Tangentialrichtung verlaufende Fläche (6) zusammenwirken.

3. Gleitringdichtung nach Anspruch 2, dadurch gekennzeichnet, daß die geneigte Fläche (6) an dem Außenring (3) angeordnet ist.

4. Gleitringdichtung nach Anspruch 3, dadurch gekennzeichnet, daß der Außenring (3) von einem flexiblen Metallband gebildet ist, das im Bereich jedes Vorsprungs (4) eine sich vom Umfang (2) des Innenrings (1) entfernende Ausbiegung aufweist, die zumindest an einer Flanke die geneigte Fläche (6) bildet.

5. Gleitringdichtung nach Anspruch 1, dadurch gekennzeichnet, daß der Vorsprung (8, 8') den ersten Arm eines an dem Außenring (3') angelenkten Hebels bildet, dessen zweiter Arm unter einer auf den ersten Arm wirkenden Mitnehmerkraft eine Radialkraft auf den Umfang des Innenrings ausübt.

6. Gleitringdichtung nach Anspruch 5, dadurch gekennzeichnet, daß der Vorsprung (8, 8') ein Verbindungsglied zwischen zwei Abschnitten (3') des Außenrings bildet und eine auf ihn ausgeübte Mitnehmerkraft ihn im Sinne einer Verkürzung seiner Verbindungslänge zu verkippen trachtet.

## Claims

1. A slip ring for a mechanical seal, the said slip ring being made up of an inner ring (1), which forms the sliding seal face, and an outer ring (3, 3') of elastically deformable material, such as steel, which is clamped on the circumferential surface (2) of the inner ring and is connected to it in a rotationally fixed position by friction, the said outer ring having projections (4, 8, 8') and/or recesses for interaction with drivers (5), characterized in that the projections (4, 8, 8') or recesses of the outer ring are designed in such a way that the force exerted on them in the circumferential direction by the respectively associated driver (5) is converted into a radial force additionally exerted on the circumference of the inner ring (1).

2. A mechanical seal according to claim 1, characterized in that the projections (4) or recesses and the respectively associated driver (5) interact via a surface (6) which extends obliquely to the tangential direction.

3. A mechanical seal according to claim 2, characterized in that the oblique surface (6) is arranged on the outer ring (3).

4. A mechanical seal according to claim 3, characterized in that the outer ring (3) is formed by a flexible metal band which in the region of each projection (4) has a bent-out feature which extends away from the circumference (2) of the inner ring (1) and forms the oblique surface (6) on at least one flank.

5. A mechanical seal according to claim 1, characterized in that the projection (8, 8') forms the first arm of the lever which is connected pivotally to the outer ring (3') and the second arm of which exerts a radial force on the circumference of the inner ring when subjected to a driver force acting on the first arm.

6. A mechanical seal according to claim 5, characterized in that the projection (8, 8') forms a connecting member between two sections (3') of the outer ring, and a driver force exerted on it tends to tilt it in such a way as to shorten its connection length.

## Revendications

1. Bague glissante pour joint d'étanchéité à bague glissante, laquelle bague est composée d'une bague intérieure (1) formant la surface d'étanchéité à glissement et d'une bague extérieure (3, 3') en un matériau élastiquement déformable tel que l'acier, qui est étendue sur la surface périphérique (2) de la bague intérieure et reliée à rotation solidaire à cette dernière par frottement et qui présente des saillies (4, 8, 8') et/ou des évidements destinés à coopérer avec des dispositifs d'entraînement (5), caractérisée en ce que les saillies (4, 8, 8') resp. évidements de la bague extérieure sont configurés de telle sorte que la force exercée dans la direction périphérique sur la bague extérieure par le dispositif d'entraînement (5) qui lui est à chaque fois associé est convertie en une force radiale supplémentaire exercée sur la périphérie de la bague intérieure (1).

2. Joint d'étanchéité à bague glissante selon la revendication 1, caractérisé en ce que les saillies (4) resp. évidements et le dispositif d'entraînement (5) qui lui est à chaque fois associé coopèrent par l'intermédiaire d'une surface (6) qui s'étend obliquement par rapport à la direction tangentielle.

3. Joint d'étanchéité à bague glissante selon la revendication 2, caractérisé en ce que la surface oblique (6) est disposée sur la bague extérieure (3).

4. Joint d'étanchéité à bague glissante selon la revendication 3, caractérisé en ce que la bague extérieure (3) est formée par une bande métallique flexible qui, dans la zone de chaque saillie (4), présente une partie cintrée s'éloignant de la périphérie (2) de la bague intérieure (1) et qui forme au moins sur un flanc la surface inclinée (6).

5. Joint d'étanchéité à bague glissante selon la revendication 1, caractérisé en ce que la saillie (8, 8') forme le premier bras d'un levier articulé sur la bague extérieure (3'), levier dont le deuxième bras exerce une force radiale sur la périphérie de la bague intérieure lorsque le dispositif d'entraînement exerce une force sur le premier bras.

6. Joint d'étanchéité à bague glissante selon la revendication 5, caractérisé en ce que la saillie (8, 8') forme un organe de liaison entre deux parties (3') de la bague extérieure, et une force exercée sur elle par le dispositif d'entraînement tend à l'incliner dans le sens de raccourcissement de sa longueur de liaison.
